# EUROPEAN PATENT APPLICATION

(11) **EP 4 358 454 A1**
(43) Date of publication of application: **24.04.2024**
(21) Application number: 21945565.6
(22) Date of filing: 18.06.2021
(51) Int. Cl.: H04L 5/00, H04W 4/20, H04W 72/04

(54) **INFORMATION INDICATING METHOD AND APPARATUS, USER EQUIPMENT, BASE STATION, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: dompatent von Kreisler Selting Werner - Partnerschaft von Patent- und Rechtsanwälten mbB
(86) International application number: PCT/CN2021/101078
(87) International publication number: WO 2022/261982

(57) **Abstract**

The present disclosure provides an information indicating method and apparatus, a user equipment (UE), a base station, and a storage medium, and belongs to the technical field of communications. The method comprises: a UE acquiring indication information sent by a base station (101), the indication information comprising at least one TCI state ID corresponding to at least one codepoint; the UE then determining that a TCI state corresponding to the at least one TCI state ID is a joint TCI state and/or a separate TCI state, and/or determining that the TCI state is applicable to uplink transmission and/or downlink reception (102). Thus, in the embodiments of the present disclosure, unified TCI state indication is implemented, reducing signaling overhead and improving DCI signaling reliability.

## Description

### TECHNICAL FIELD

The disclosure relates to the field of communication technologies, and more particularly, to a method and an apparatus for information indication, a user equipment (UE), a base station, and a storage medium.

### BACKGROUND

A unified transmission configuration indicator (TCI) state indication is introduced to reduce signaling overheads. The unified TCI state indication includes a joint TCI state indication and/or a separate TCI state indication. The joint TCI state indication may include indicating a certain TCI state for uplink transmission and downlink reception at the same time. The separate TCI state indication may include indicating a certain TCI state for uplink transmission or downlink reception.

However, in the related art, there is no method for indicating the unified TCI state, so there is an urgent need for a method for indicating the unified TCI state.

### SUMMARY

A method and an apparatus for information indication, a UE, a base station, and a storage medium, provided in the disclosure, to provide an indication for a unified TCI state.

According to an aspect of embodiments of the disclosure, a method for information indication is provided and applicable to a UE. The method includes: obtaining indication information from a base station, in which the indication information includes at least one TCI state index (ID) corresponding to at least one codepoint; and determining that a TCI state corresponding to the at least one TCI state ID is a joint TCI state and/or a separate TCI state, and/or determining that the TCI state is suitable for uplink transmission and/or downlink reception.

According to another aspect of embodiments of the disclosure, a method for information indication is provided and applicable to a base station. The method includes: transmitting indication information to a UE, in which the indication information includes at least one TCI state ID corresponding to at least one codepoint.

According to still another aspect of embodiments of the disclosure, an apparatus for information indication is provided and includes: an obtaining module, configured to obtain indication information including at least one TCI state ID corresponding to at least one codepoint; and a determining module, configured to determine that a TCI state corresponding to the at least one TCI state ID is a joint TCI state and/or a separate TCI state, and/or determine that the TCI state is suitable for uplink transmission and/or downlink reception.

According to still another aspect of embodiments of the disclosure, an apparatus for information indication is provided and includes: a transmitting module, configured to transmit indication information to a UE, in which the indication information includes at least one TCI state ID corresponding to at least one codepoint.

According to still another aspect of embodiments of the disclosure, a UE is provided and includes: a transceiver; a memory; and a processor, connected to the transceiver and the memory respectively, configured to, by executing computer-executable instructions on the memory, control wireless signal transmission and reception of the transceiver and perform the method as described above in the aspect of the embodiments.

According to still another aspect of embodiments of the disclosure, a base station is provided and includes: a transceiver; a memory; and a processor, connected to the transceiver and the memory respectively, configured to, by executing computer-executable instructions on the memory, control wireless signal transmission and reception of the transceiver and perform the method as described above in the other aspect of the embodiments.

According to still another aspect of embodiments of the disclosure, a computer storage medium is provided and stores computer-executable instructions. When the computer-executable instructions are executed by a processor, the method as described above is realized.

In conclusion, in the method and the apparatus for information indication, the UE, the base station, and the storage medium, provided in the embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate downlink (DL) TCI state, the separate uplink (UL) TCI state, and the separate DL&UL TCI state, thereby improving the reliability of signalings (such as a downlink control information (DCI) signaling).

Additional aspects and advantages of the embodiments of the disclosure will be given in part in the following descriptions, become apparent in part from the following descriptions, or be learned from the practice of the embodiments of the disclosure.

### BRIEF DESCRIPTION OF THE DRAWINGS

The above and/or additional aspects and advantages of the embodiments of the disclosure will become apparent and more readily from the following descriptions made with reference to the accompanying drawings, in which:
FIG. 1 is a schematic flowchart of a method for information indication according to some embodiments of the disclosure.
FIG. 2 is a schematic flowchart of another method for information indication according to some embodiments of the disclosure.
FIG. 3 is a schematic flowchart of still another method for information indication according to some embodiments of the disclosure.
FIG. 4 is a schematic flowchart of still another method for information indication according to some embodiments of the disclosure.
FIG. 5 is a schematic flowchart of still another method for information indication according to some embodiments of the disclosure.
FIG. 6 is a schematic flowchart of still another method for information indication according to some embodiments of the disclosure.
FIG. 7 is a schematic flowchart of still another method for information indication according to some embodiments of the disclosure.
FIG. 8 is a schematic block diagram of an apparatus for information indication according to some embodiments of the disclosure.
FIG. 9 is a schematic block diagram of another apparatus for information indication according to some embodiments of the disclosure.
FIG. 10 is a block diagram of a UE according to some embodiments of the disclosure.
FIG. 11 is a block diagram of a base station according to some embodiments of the disclosure.

### DETAILED DESCRIPTION

Reference will now be made in detail to some embodiments of the disclosure, examples of which are illustrated in the accompanying drawings. The following descriptions refer to the accompanying drawings in which the same numbers in different drawings represent the same or similar elements unless otherwise represented. The implementations set forth in the following descriptions of some embodiments do not represent all implementations consistent with embodiments of the disclosure. Instead, they are merely examples of apparatuses and methods consistent with aspects related to the embodiments of the disclosure as recited in the appended claims.

The terms used in the embodiments of the disclosure are only for the purpose of describing specific embodiments and are not intended to limit the embodiments of the disclosure. The singular forms of "a" and "the" used in the embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms first, second, and third may be used in the embodiments of the disclosure to describe various information, the information should not be limited to these terms. These terms are only used to distinguish the same type of information from each other. For example, without departing from the scope of the embodiments of the disclosure, the first information may also be referred to as the second information, and similarly, the second information may also be referred to as the first information. Depending on the context, the word "if' as used herein may be interpreted as "when", "while" or "in response to determining".

The embodiments of the disclosure are described in detail below. Examples of the embodiments are illustrated in the accompanying drawings where the same or similar numbers throughout indicate the same or similar elements. The embodiments described below by reference to the accompanying drawings are illustrative and are intended to interpret the disclosure and are not to be construed as a limitation of the disclosure.

In the method for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information. It may be seen that, the embodiments of the disclosure provide a specific method for indicating the TCI state, realize the unified TCI state indication, and reduce the signaling overheads.

A method and an apparatus for information indication, a UE, a base station, and a storage medium provided in the disclosure will be described in detail below with reference to the accompanying drawings.

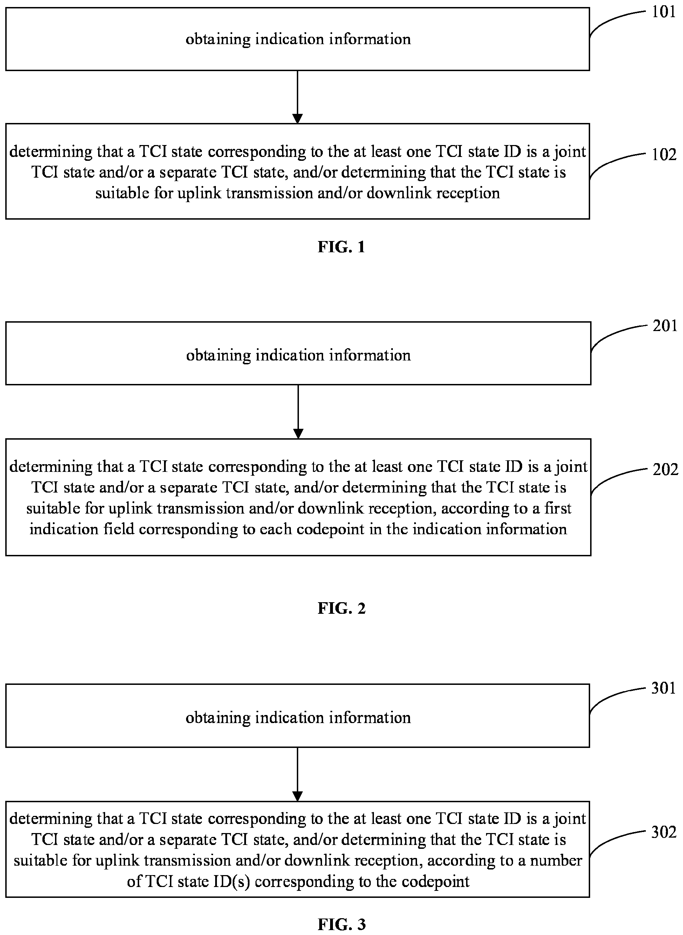

FIG. 1 is a schematic flowchart of a method for information indication according to some embodiments of the disclosure. The method is applicable to a UE. As illustrated in FIG. 1, the method for information indication may include the following steps.

Step 101, indication information is obtained. The indication information includes at least one TCI state index (ID) corresponding to at least one codepoint.

It should be noted that the method for information indication in the embodiments of the disclosure may be applicable to any UE. A UE may be a device that provides voice and/or data connectivity to a user. The UE may communicate with one or more core networks via a radio access network (RAN). The UE may be an internet of things (IoT) terminal such as a sensor device, a mobile phone (or a cellular phone), and a computer with the IoT terminal such as a fixed, portable, pocket-sized, handheld, built-in computer, or vehicle-mounted device, for example, station (STA), subscriber unit, subscriber station, mobile station, mobile, remote station, access point, remote terminal, access terminal, user terminal, or user agent. Alternatively, the UE may also be a device of an unmanned aircraft. Alternatively, the UE may also be an in-vehicle device, for example, a trip computer having a wireless communication function or a wireless communication device connected to the trip computer. Alternatively, the UE may also be a roadside device, for example, a street lamp, a signal lamp, or other roadside device, having the wireless communication function.

It should be noted that, in some embodiments of the disclosure, the codepoint included in the indication information is a codepoint corresponding to a TCI field included a downlink control information (DCI) signaling. In some embodiments of the disclosure, one codepoint may correspond to one TCI state ID. In other embodiments of the disclosure, one codepoint may correspond to a plurality of TCI state IDs. In some embodiments of the disclosure, when one codepoint corresponds to a plurality of TCI state IDs, the plurality of TCI state IDs may be the same. In other embodiments of the disclosure, when one codepoint corresponds to a plurality of TCI state IDs, the plurality of TCI state IDs may be different.

In some embodiments of the disclosure, the indication information is transmitted by the base station. The UE may obtain the indication information transmitted by the base station through a media access control control element (MACCE) signaling.

Step 102, it is determined that a TCI state corresponding to the at least one TCI state ID is a joint TCI state and/or a separate TCI state, and/or it is determined that the TCI state is suitable for uplink transmission and/or downlink reception.

In some embodiments of the disclosure, the joint TCI state is: a certain TCI state for uplink transmission and downlink reception at the same time. In some embodiments of the disclosure, the joint TCI state indication includes: indicating a certain TCI state for uplink transmission and downlink reception at the same time.

In other embodiments of the disclosure, the separate TCI state is: a certain TCI state for uplink transmission or downlink reception. In some embodiments of the disclosure, the separate TCI state indication includes: indicating a certain TCI state for uplink transmission only; indicating a certain TCI state for downlink reception only; or indicating at least two TCI states, in which one of the TCI states is used for downlink reception and another of the TCI states is used for uplink transmission.

Based on this, in some embodiments of the disclosure, the separate TCI state may include: a separate downlink (DL) TCI state (that is, corresponding to the case of "indicating a certain TCI state for downlink reception only "), a separate uplink (UL) TCI state (that is, corresponding to the case of "indicating a certain TCI state for uplink transmission only "), or a separate DL TCI state and a separate UL TCI state (that is, corresponding to the case of "indicating at least two TCI states, in which one of the TCI states is used for downlink reception and another of the TCI states is used for uplink transmission").

It should be noted that, in some embodiments of the disclosure, the uplink transmission may include at least one of: physical uplink control channel (PUCCH) transmission, physical uplink shared channel (PUSCH) transmission, physical random access channel (PRACH) transmission, demodulation reference signal (DMRS) transmission, uplink scheduling requesting (SR) transmission, or sounding reference signal (SRS) transmission.

In some embodiments of the disclosure, the downlink reception may include at least one of: physical downlink control channel (PDCCH) transmission, physical downlink shared channel (PDSCH) transmission, physical broadcast channel (PBCH) transmission, synchronization signal block (SSB) transmission, DMRS transmission, channel state information reference signal (CSI-RS) transmission, positioning reference signal (PRS) transmission, or tracking reference signal (TRS) transmission.

It should be noted that all the embodiments of the disclosure are described for a transmission reception point (TRP). That is, the number and type(s) of TCI state ID(s) corresponding to the codepoint are for one TRP. If a plurality of TRPs are considered, the number and/or type(s) of TCI state ID(s) for each codepoint may be configured independently for different TRPs. The type herein refers to at least one of: the separate TCI state, the joint TCI state, the uplink TCI state, or the downlink TCI state.

For example, in some embodiments of the disclosure, when the base station corresponds to a first TRP and a second TRP, the TCI state of the TCI state ID of the first TRP corresponding to the first codepoint may only be the joint TCI state, and the TCI state of the TCI state ID of the second TRP corresponding to the first codepoint may be the separate TCI state or the joint TCI state. Or, in other embodiments of the disclosure, the TCI state of the TCI state ID of the first TRP corresponding to the first codepoint may only be the separate TCI state, and the TCI state of the TCI state ID of the second TRP corresponding to the first codepoint may be the separate TCI state or the joint TCI state.

In some embodiments of the disclosure, the method for determining that the TCI state corresponding to the at least one TCI state ID is the joint TCI state and/or the separate TCI state may include: determining that the TCI state corresponding to the at least one TCI state ID is the joint TCI state and/or the separate TCI state according to a first indication field corresponding to each codepoint in the indication information.

In other embodiments of the disclosure, the method for determining that the TCI state corresponding to the at least one TCI state ID is the joint TCI state and/or the separate TCI state may include: determining that the TCI state corresponding to the at least one TCI state ID is the joint TCI state and/or the separate TCI state according to a number of TCI state ID(s) corresponding to the codepoint.

In some embodiments of the disclosure, when it is determined that the TCI state of one TCI state ID corresponding to the codepoint is the separate TCI state, it is also necessary to determine whether the TCI state ID corresponding to the codepoint corresponds to the separate DL TCI state or the separate UL TCI state. In other embodiments of the disclosure, when the codepoint corresponds to a plurality of different TCI state IDs, it is necessary to determine which TCI state ID corresponding to the separate DL TCI state and which TCI state ID corresponding to the separate UL TCI state in the plurality of different TCI state IDs.

That is, when it is determined that the TCI state of the TCI state ID corresponding to the codepoint is the separate TCI state, it is also necessary to determine that the separate TCI state is the separate UL TCI state suitable for uplink transmission and/or the separate DL TCI state suitable for downlink reception.

In some embodiments of the disclosure, the method for determining the separate TCI state is the separate UL TCI state suitable for uplink transmission and/or the separate DL TCI state suitable for downlink reception may include at least one of:
determining according to an ID value of the at least one TCI state ID corresponding to the codepoint;
determining according to a TCI state pool ID to which the at least one TCI state ID corresponding to the codepoint belongs;
determining according to uplink and downlink purpose information of the at least one TCI state ID corresponding to the codepoint;
determining according to TCI state information of the at least one TCI state ID corresponding to the codepoint; or
determining according to a location of an indication field of the at least one TCI state ID corresponding to the codepoint in the indication information.

It should be noted that, in some embodiments of the disclosure, the method for determining that the separate TCI state is the separate UL TCI state and/or the separate DL TCI state may be any one of the above methods. In other embodiments of the disclosure, the method for determining that the separate TCI state is the separate UL TCI state and/or the separate DL TCI state may be a combination of any two thereof, a combination of any three thereof, a combination of any four thereof, or all five methods, in the above representations.

In some embodiments of the disclosure, the above-mentioned method of determining that the TCI state corresponding to the at least one TCI state ID is the joint TCI state and/or the separate TCI state according to the number of TCI state ID(s) corresponding to the codepoint may include:
determining a value range of a TCI state ID corresponding to a TCI state for uplink transmission and a value range of a TCI state ID corresponding to a TCI state for downlink reception according to default rules and/or configuration information; and determining the separate TCI state of each TCI state ID is the separate UL TCI state and/or the separate DL TCI state according to the value range of the TCI state ID corresponding to the TCI state for uplink transmission, the value range of the TCI state ID corresponding to the TCI state for downlink reception, and the ID value of each TCI state ID.

In some embodiments of the disclosure, the default rules may be pre-agreed between the UE and the base station according to an agreement. The configuration information may be configured by the base station to the UE through a radio resource control (RRC) signaling.

For example, in some embodiments of the disclosure, the default rules and/or configuration information may indicate: TCI state ID#0-63 corresponds to the separate DL TCI state, that is, corresponds to the downlink reception state, and TCI state ID#64-127 corresponds to the separate UL TCI state, that is, corresponds to the uplink transmission state.

Based on this, in some embodiments of the disclosure, it is assumed that a certain codepoint corresponds to two TCI state IDs, including: TCI state ID#0 and TCI state ID#65. Based on the default rules and/or configuration information, it may be determined that TCI state ID#0 corresponds to the separate DL TCI state, that is, corresponds to the downlink reception state, and TCI state ID#65 corresponds to the separate UL TCI state, that is, corresponds to the uplink transmission state.

In some embodiments of the disclosure, the above-mentioned method of determining that the TCI state corresponding to the at least one TCI state ID is the joint TCI state and/or the separate TCI state according to the TCI state pool ID to which the at least one TCI state ID corresponding to the codepoint belongs may include:
agreeing in advance a first TCI state pool ID corresponding to the TCI state for uplink transmission and a second TCI state pool ID corresponding to the TCI state for downlink reception, in which the first TCI state pool ID is different from the second TCI state pool ID; and enabling the indication information to include a TCI state pool ID to which the at least one TCI state ID corresponding to the codepoint belongs. After that, the UE may determine that the at least one TCI state ID is suitable for uplink transmission and/or downlink reception according to the pre-agreed first TCI state pool ID and second TCI state pool ID, and the TCI state pool ID to which the at least one TCI state ID corresponding to the codepoint belongs, included in the indication information.

For example, in some embodiments of the disclosure, it is assumed that pool ID#0 corresponds to the TCI state for downlink reception and pool ID#1 corresponds to the TCI state for uplink transmission. A certain codepoint corresponds to two TCI state IDs, including: TCI state ID#0 and TCI state ID#1. The indication information further includes TCI state pool ID#0 corresponding to TCI state ID#0 and/or TCI state pool ID#1 corresponding to TCI state ID#1. It may be determined that TCI state ID#0 corresponds to the separate DL TCI state, that is, corresponds to the downlink reception state; and TCI state ID#1 corresponds to the separate UL TCI state, that is, corresponds to the uplink transmission state.

In some embodiments of the disclosure, the above-mentioned method of determining that the TCI state corresponding to the at least one TCI state ID is the joint TCI state and/or the separate TCI state according to the uplink and downlink purpose information of the at least one TCI state ID corresponding to the codepoint may include: each TCI state ID in the indication information also corresponds to a third indication field, the third indication field may include M bits, M is a positive integer, and the third indication field may be used for indicating uplink and downlink purpose information of the corresponding TCI state ID, in which the uplink and downlink purpose information includes any of the following: for uplink transmission, for downlink reception, or for uplink transmission and downlink reception. Then, based on the third indication field corresponding to each TCI state ID, it may be determined that each TCI state ID is used for uplink transmission and/or downlink reception.

For example, in some embodiments of the disclosure, it is assumed that the third indication field includes 2 bits. When the value of the third indication field is 10, it indicates that the uplink and downlink purpose information of the corresponding TCI state ID is used for uplink transmission; when the value of the third indication field is 01, it indicates that the uplink and downlink purpose information of the corresponding TCI state ID is used for downlink reception; and when the value of the third indication field is 11, it indicates the uplink and downlink purpose information of the corresponding TCI state ID is used for uplink transmission and downlink reception.

Based on this, in some embodiments of the disclosure, if a certain codepoint corresponds to two TCI state IDs, including TCI state ID#0 and TCI state ID#1, the third indication field corresponding to TCI state ID#0 is 10, and the third indication field corresponding to TCI state ID#1 is 01, it may be determined that the TCI state corresponding to TCI state ID#0 is the separate UL TCI state, which is used for uplink transmission, and the TCI state corresponding to TCI state ID#1 is the separate DL TCI state, which is used for downlink reception.

In addition, it should be noted that if the purpose information indicated by the third indication field corresponding to a certain TCI state ID is used for uplink transmission and downlink reception, it may be confirmed that the TCI state corresponding to the TCI state ID is the joint TCI state.

In some embodiments of the disclosure, the above-mentioned method of determining that the TCI state corresponding to the at least one TCI state ID is the joint TCI state and/or the separate TCI state according to the TCI state information of the at least one TCI state ID corresponding to the codepoint may include: determining the TCI state information corresponding to the TCI state ID, in which the TCI state information may include at least one of: a reference signal type corresponding to quasi co-location type D (QCL type D) included in the TCI state or a purpose of a reference signal in the TCI state; and determining that the TCI state ID is suitable for uplink transmission and/or downlink reception according to the TCI state information corresponding to each TCI state ID.

In some embodiments of the disclosure, it may be determined that the separate TCI state of the at least one TCI state ID corresponding to the codepoint is the separate UL TCI state and/or the separate DL TCI state only according to the reference signal type corresponding to the QCL type D.

In detail, in some embodiments of the disclosure, the reference signal type corresponding to the QCL type D included in the TCI state may include at least one of: a synchronization signal block (SSB); a channel state information reference signal (CSI-RS); or a sounding reference signal (SRS).

In some embodiments of the disclosure, determining that the separate TCI state of the at least one TCI state ID corresponding to the codepoint is the separate UL TCI state and/or the separate DL TCI state only according to the reference signal type corresponding to the QCL type D may include: when the reference signal type of the QCL type D included in the TCI state corresponding to the TCI state ID is SSB or SRS, it is determined that the TCI state corresponding to the TCI state ID is suitable for uplink transmission; and when the reference signal type of the QCL type D included in the TCI state corresponding to the TCI state ID is CSI-RS, it is determined that the TCI state corresponding to the TCI state ID is suitable for downlink reception.

For example, in some embodiments of the disclosure, if a certain codepoint corresponds to two TCI state IDs, including TCI state ID#0 and TCI state ID#1, the reference signal of the QCL type D included in the TCI state corresponding to TCI state ID#0 is CSI-RS, and the reference signal of the QCL type D included in the TCI state corresponding to TCI state ID#1 is SRS, it may be determined that TCI state ID#0 is used for downlink reception and TCI state ID #1 is used for uplink transmission.

Further, in some embodiments of the disclosure, it may be determined that the separate TCI state of the at least one TCI state ID corresponding to the codepoint is the separate UL TCI state and/or the separate DL TCI state only according to the purpose of the reference signal in the TCI state.

In detail, in some embodiments of the disclosure, the purpose of the reference signal includes at least one of: a QCL information indication; a pathloss indication; or a power control parameter indication. In some embodiments of the disclosure, the QCL may be any one of QCL Type A, QCL Type B, QCL Type C, QCL Type D, or QCL Type E.

In some embodiments of the disclosure, determining that the separate TCI state of the at least one TCI state ID corresponding to the codepoint is the separate UL TCI state and/or the separate DL TCI state according to the purpose of the reference signal in the TCI state may include: determining that the reference signal included in the TCI state corresponding to the TCI state ID is used for uplink transmission or downlink reception, and determining that the TCI state corresponding to the TCI state ID is suitable for uplink transmission or downlink reception.

For example, in some embodiments of the disclosure, if a certain codepoint corresponds to a TCI state ID, including TCI state ID#0, and the purpose of the reference signal of the TCI state corresponding to TCI state ID#0 is a pathloss indication and/or a power control parameter indication, it may be determined that TCI state ID#0 is used for uplink transmission because the power control parameter indication is applied to uplink transmission.

Further, in some embodiments of the disclosure, it may be determined that the separate TCI state of the at least one TCI state ID corresponding to the codepoint is the separate UL TCI state and/or the separate DL TCI state according to the reference signal type corresponding to the QCL type D included in the TCI state and the purpose of the reference signal in the TCI state. For a specific determination method, reference may be made to the foregoing description, and the embodiments of the disclosure will not repeat them herein.

In some embodiments of the disclosure, determining that the separate TCI state of the at least one TCI state ID corresponding to the codepoint is the separate UL TCI state and/or the separate DL TCI state according to the location of the indication field of the at least one TCI state ID corresponding to the codepoint in the indication information may include:
each codepoint corresponds to at least one TCI state ID indication field, which is used for correspondingly storing a TCI state ID. For example, in some embodiments of the disclosure, the first TCI state ID indication field corresponding to the codepoint may be used to indicate the joint TCI state or the separate DL TCI state and the second TCI state ID indication field corresponding to the codepoint may be used to indicate the joint TCI state or the separate UL TCI state. In other embodiments of the disclosure, the first TCI state ID indication field corresponding to the codepoint may be used to indicate the joint TCI state or the separate UL TCI state and the second TCI state ID indication field corresponding to the codepoint may be used to indicate the joint TCI state or the separate DL TCI state.

Based on this, in some embodiments of the disclosure, by determining the TCI state ID indication field, it may be determined that the TCI state indicated by the TCI state ID in the TCI state ID indication field is the separate UL TCI state and/or the separate DL TCI state.

For example, in some embodiments of the disclosure, it is assumed that the codepoint in the indication information corresponds to two TCI state ID indication fields, including a first TCI state ID indication field and a second TCI state ID indication field, in which for example, the first TCI state ID indication field indicates the separate DL TCI state and the second TCI state ID indication field indicates the separate UL TCI state, then it is determined that the TCI state ID stored in the first TCI state ID indication field may be used for downlink reception and it is determined that the TCI state ID stored in the second TCI state ID indication field may be used for uplink transmission.

In addition, it should be noted that in some embodiments of the disclosure, when the TCI state ID used for downlink reception is determined, an RRC signaling and/or an MAC CE signaling may be used to indicate which downlink reception the TCI state ID is used for. For example, in some embodiments of the disclosure, it may indicate that the TCI state ID used for downlink reception is used for at least one of PDCCH, PDSCH, PBCH, SSB, DMRS, CSI-RS, PRS, or TRS. In some embodiments of the disclosure, when indicating the TCI state ID used for downlink reception to transmit a reference signal, the purpose of the transmitted reference signal may be any one or multiple purposes. For example, if the TCI state ID used for downlink reception is indicated to transmit CSI-RS, the CSI-RS may be at least one of beam measurement, phase tracking, or channel state information measurement.

In addition, it should be noted that in some embodiments of the disclosure, when the TCI state ID used for uplink transmission is determined, an RRC signaling and/or an MAC CE signaling may be used to indicate which uplink transmission the TCI state ID is used for. For example, in some embodiments of the disclosure, it may be indicated that the TCI state ID used for uplink transmission is used for at least one of PUCCH, PUSCH, PRACH, SRS, DMRS, or SR. In some embodiments of the disclosure, when indicating the TCI state ID used for uplink transmission to transmit a reference signal, the purpose of the transmitted reference signal may be any one or multiple purposes. For example, if the TCI state ID used for uplink transmission is indicated to transmit SRS, the SRS may be used for at least one of beam measurement, codebook-based channel state information measurement, non-codebook-based channel state information measurement, antenna switching, or positioning measurement.

In conclusion, in the method and the apparatus for information indication, the UE, the base station, and the storage medium, provided in the embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

FIG. 2 is a schematic flowchart of another method for information indication according to some embodiments of the disclosure. The method is applicable to a UE. As illustrated in FIG. 2, the method for information indication may include the following steps.

Step 201, indication information is obtained.

Step 202, it is determined that a TCI state corresponding to the at least one TCI state ID is a joint TCI state and/or a separate TCI state, and/or it is determined that the TCI state is suitable for uplink transmission and/or downlink reception, according to a first indication field corresponding to each codepoint in the indication information.

In some embodiments of the disclosure, the method for the UE to determine the TCI state corresponding to the at least one TCI state ID according to the first indication field included in the indication information may include:
the first indication field indicating any of:
case 1: the indication information only activating the joint TCI state;
case 2: the indication information only activating the separate TCI state; or
case 3: the indication information activating the joint TCI state and the separate TCI state.

For example, in some embodiments of the disclosure, the first indication field may include 2 bits. In some embodiments of the disclosure; when the first indication field is 10, the first indication field may be used to indicate that the indication information received by the UE only activates the joint TCI state; when the first indication field is 01, the first indication field may be used to indicate that the indication information received by the UE only activates the separate TCI state; and when the first indication field is 11, the first indication field may be used to indicate that the indication information received by the UE activates the joint TCI state and separate TCI state.

It should be noted that, in some embodiments of the disclosure, when the first indication field indicates that the indication information only activates the joint TCI state, the indication information indicates at most one TCI state ID corresponding to each codepoint. The TCI state corresponding to the one TCI state ID is the joint TCI state and the joint TCI state is used for uplink transmission and downlink reception.

In other embodiments of the disclosure, when the first indication field indicates that the indication information only activates the separate TCI state, the indication information indicates one TCI state ID corresponding to the first codepoint. The TCI state corresponding to the one TCI state ID is the separate DL TCI state or the separate UL TCI state, in which the separate DL TCI state is used for downlink reception and the separate UL TCI state is used for uplink transmission, and/or

In other embodiments of the disclosure, the indication information indicates a plurality of TCI state IDs corresponding to the second codepoint, and the plurality of TCI state IDs correspond to different TCI states. The first TCI state ID among the plurality of TCI state IDs is the separate DL TCI state, the second TCI state ID among the plurality of TCI state IDs is the separate UL TCI state, the separate DL TCI state is used for downlink reception, and the separate UL TCI state is used for uplink transmission.

That is, in some embodiments of the disclosure, when the first indication field indicates that the indication information only activates the separate TCI state, the indication information may include one or more TCI state IDs corresponding to the first codepoint and/or the second codepoint in the above embodiments.

In other embodiments of the disclosure, when the first indication field indicates that the indication information activates the joint TCI state and the separate TCI state, the indication information indicates one TCI state ID corresponding to the first codepoint. The TCI state corresponding to the one TCI state ID is the separate DL TCI state or the separate UL TCI state, the separate DL TCI state is used for downlink reception, and the separate UL TCI state is used for uplink transmission; and/or

In other embodiments of the disclosure, the indication information indicates a plurality of TCI state IDs corresponding to the second codepoint, and the plurality of TCI state IDs correspond to the same TCI state. The same TCI state is the joint TCI state, and the joint TCI state is used for uplink transmission and downlink reception; and/or

In other embodiments of the disclosure, the indication information indicates a plurality of TCI state IDs corresponding to the third codepoint, and the plurality of TCI state IDs correspond to different TCI states. The TCI state corresponding to the first TCI state ID among the plurality of TCI state IDs is the separate DL TCI state, and the TCI state corresponding to the second TCI state ID among the plurality of TCI state IDs is the separate UL TCI state.

That is, in some embodiments of the disclosure, when the first indication field indicates that the indication information activates the joint TCI state and the separate TCI state, the indication information may include one or more TCI state IDs respectively corresponding to the first codepoint and/or the second codepoint and/or the third codepoint in the above embodiments.

Further, in some embodiments of the disclosure, when it is determined that the TCI state of the one TCI state ID corresponding to the codepoint is the separate TCI state, it is also necessary to determine whether the TCI state ID corresponding to the codepoint corresponds to the separate DL TCI state or the separate UL TCI state. In other embodiments of the disclosure, when the codepoint corresponds to a plurality of different TCI state IDs, it is also necessary to determine which TCI state ID among the plurality of different TCI state IDs corresponds to the separate DL TCI state and which TCI state ID among the plurality of different TCI state IDs corresponds to the separate UL TCI state.

That is, when it is determined that the TCI state of the TCI state ID corresponding to the codepoint is the separate TCI state, it is also necessary to determine that the separate TCI state is specifically the separate UL TCI state suitable for uplink transmission and/or the separate DL TCI state suitable for downlink reception.

In some embodiments of the disclosure, the determining that the TCI state is suitable for uplink transmission and/or downlink reception may include at least one of:
determining according to an ID value of the at least one TCI state ID corresponding to the codepoint;
determining according to a TCI state pool ID to which the at least one TCI state ID corresponding to the codepoint belongs;
determining according to uplink and downlink purpose information of the at least one TCI state ID corresponding to the codepoint;
determining according to TCI state information of the at least one TCI state ID corresponding to the codepoint; or
determining according to a location of an indication field of the at least one TCI state ID corresponding to the codepoint in the indication information.

It should be noted that, in some embodiments of the disclosure, the method for determining that the separate TCI state is the separate UL TCI state and/or the separate DL TCI state may be any one of the above methods. In other embodiments of the disclosure, the method for determining that the separate TCI state is the separate UL TCI state and/or the separate DL TCI state may be a combination of any two thereof, a combination of any three thereof, a combination of any four thereof, or all five methods, in the above representations.

In conclusion, in the method and the apparatus for information indication, the UE, the base station, and the storage medium, provided in the embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

FIG. 3 is a schematic flowchart of still another method for information indication according to some embodiments of the disclosure. The method is applicable to a UE. As illustrated in FIG. 3, the method for information indication may include the following steps.

Step 301, indication information is obtained. The indication information includes at least one TCI state ID corresponding to at least one codepoint.

Step 302, it is determined that a TCI state corresponding to the at least one TCI state ID is a joint TCI state and/or a separate TCI state, and/or it is determined that the TCI state is suitable for uplink transmission and/or downlink reception, according to a number of TCI state ID(s) corresponding to the codepoint.

In other embodiments of the disclosure, determining that the TCI state corresponding to the at least one TCI state ID is the joint TCI state and/or the separate TCI state, according to the number of TCI state ID(s) corresponding to the codepoint may include at least one of:
method 1: determining according to the number of TCI state ID(s) corresponding to the codepoint;
method 2: determining according whether or not a plurality of TCI state IDs corresponding to the codepoint are the same; or
method 3: determining according to whether or not TCI states corresponding to a plurality of TCI state IDs corresponding to the codepoint are the same.

In some embodiments of the disclosure, determining that the TCI state corresponding to the at least one TCI state ID is the joint TCI state and/or the separate TCI state, according to the number of TCI state ID(s) corresponding to the codepoint may include:
in response to the number of TCI state ID(s) corresponding to the codepoint being one, determine that the TCI state corresponding to the one TCI state ID corresponding to the codepoint is the separate DL TCI state or the separate UL TCI state;
in response to the number of TCI state ID(s) corresponding to the codepoint being multiple and the plurality of TCI state IDs or TCI states corresponding to the plurality of TCI state IDs are the same, determining that TCI states corresponding to the plurality of TCI state IDs corresponding to the codepoint being the joint TCI state and the joint TCI state being configured for downlink reception and uplink transmission; or
in response to the number of TCI state ID(s) corresponding to the codepoint being multiple and the plurality of TCI state IDs or TCI states corresponding to the plurality of TCI state IDs are different, determining that the TCI states corresponding to the plurality of TCI state IDs corresponding to the codepoint are the separate TCI state, in which a TCI state corresponding to a first TCI state ID among the plurality of TCI state IDs is the separate DL TCI state, and a TCI state corresponding to a second TCI state ID among the plurality of TCI state IDs is the separate UL TCI state.

It should be noted that, in some embodiments of the disclosure, the UE may determine the number of TCI state ID(s) corresponding to the codepoint according to the second indication field in the indication information. In detail, the indication information also includes at least one second indication field. The second indication field is in one-to-one correspondence with the TCI state ID indication field corresponding to the codepoint. The second indication field is used to indicate whether the TCI state ID appears in the TCI state ID indication field corresponding to the codepoint. When the TCI state ID appears in the TCI state ID indication field, it means that the TCI state ID is stored in the TCI state ID indication field; otherwise, it means that the TCI state ID is not stored in the TCI state ID indication field. Thus, the number of TCI state ID(s) corresponding to the codepoint may be determined based on the number of second indication field(s) which indicates the TCI state ID appears in the TCI state ID indication field corresponding to the codepoint. In detail, when the codepoint corresponds to H second indication fields indicating that a TCI state ID appears in the corresponding TCI state ID indication field, it is determined that the codepoint corresponds to H TCI state IDs, and H is a positive integer.

In addition, it should be noted that, in some embodiments of the disclosure, at least one second indication field included in the above indication information may only correspond to i TCI state ID indication fields corresponding to the codepoint one-to-one, and N is the total number of corresponding TCI state ID indication fields, where N is a positive integer, i is a positive integer less than or equal to N, for example, i is N-1. Since the other N-i TCI state ID indication fields corresponding to the codepoint do not have the corresponding second indication fields, it means that there must be TCI state IDs in the other N-i TCI state ID indication fields. Therefore, it may determine the number of TCI state ID(s) corresponding to the codepoint according to the number of second indication fields in which the TCI state ID appears in the state ID indication field, by adding N-i. In detail, when there are H second indication fields in i second indication fields corresponding to the codepoint, indicating that a TCI state ID appears in the corresponding TCI state ID indication field, it is determined that the codepoint corresponds to H+N-i TCI state IDs, where H is positive integer.

In some embodiments of the disclosure, the second indication field may include N bits, where N is a positive integer.

In some embodiments of the disclosure, it is assumed that the second indication field includes 1 bit, and when the value of the second indication field is 0, it indicates that no TCI state ID appears in the corresponding TCI state ID indication field, and when the When the value of the second indication field is 1, it indicates that a TCI state ID appears in the corresponding TCI state ID indication field.

Based on this, it is assumed that the codepoint corresponds to two TCI state ID indication fields, namely the first TCI state ID indication field and the second TCI state ID indication field. If the value of the second indication field corresponding to the first TCI state ID indication field is 0 and the value of the second indication field corresponding to the second TCI state ID indication field is 1, it means that there is no TCI state ID in the first TCI state ID indication field and there is the TCI state ID in the second TCI state ID indication field, and it is determined that the codepoint corresponds to one TCI state ID.

Alternatively, it is assumed that the codepoint corresponds to two TCI state ID indication fields, which are respectively the first TCI state ID indication field arranged in the first place and the second TCI state ID indication field arranged in the second place, in which only the second TCI state ID indication field corresponds to the second indication field. Based on this, if the value of the second indication field corresponding to the second TCI state ID indication field is 0, it means that there is no TCI state ID in the second TCI state ID indication field, and it is determined that there is 0 second indication field corresponding to the codepoint indicates that a TCI state ID appears in the TCI state ID indication field. At this time, it is considered that the codepoint corresponds to 0+1=1 TCI state ID.

It should be noted that, in some embodiments of the disclosure, when the codepoint corresponds to a plurality of TCI state ID indication fields indicating that TCI state IDs appear, and the same TCI state ID indication field appear in the plurality of TCI state ID indication fields. At this time, it should be considered that the codepoint corresponds to a plurality of TCI state IDs.

In addition, it should be noted that the determining principles of the above methods 1, 2, and 3 are similar, and the embodiments of the disclosure only focus on "method 1, determining according to the number of TCI state ID(s) corresponding to the codepoint" for a detailed introduction, other determining methods (namely method 2 and method 3) may refer to the description of method 1, and the embodiments of the disclosure will not repeat them herein. The above method 1, method 2, and method 3 may be used alone or in combination.

In some embodiments of the disclosure, when it is determined that the TCI state of the TCI state ID corresponding to the codepoint is the separate TCI state, it is also necessary to determine whether the TCI state ID corresponding to the codepoint corresponds to the separate DL TCI state or the separate UL TCI state. In other embodiments of the disclosure, when the codepoint corresponds to a plurality of different TCI state IDs, it is also necessary to determine the TCI state ID corresponding to the separate DL TCI state among the plurality of different TCI state IDs and the TCI state ID corresponding to the separate UL TCI state among the plurality of different TCI state IDs.

That is, when it is determined that the TCI state of the TCI state ID corresponding to the codepoint is the separate TCI state, it is also necessary to determine that the separate TCI state is the separate UL TCI state suitable for uplink transmission and/or the separate DL TCI state suitable for downlink reception.

In some embodiments of the disclosure, the method for determining the separate TCI state as the separate UL TCI state suitable for uplink transmission and/or the separate DL TCI state suitable for downlink reception may include at least one of:
determining according to an ID value of the at least one TCI state ID corresponding to the codepoint;
determining according to a TCI state pool ID to which the at least one TCI state ID corresponding to the codepoint belongs;
determining according to uplink and downlink purpose information of the at least one TCI state ID corresponding to the codepoint;
determining according to TCI state information of the at least one TCI state ID corresponding to the codepoint; or
determining according to a location of an indication field of the at least one TCI state ID corresponding to the codepoint in the indication information.

It should be noted that, in some embodiments of the disclosure, the method for determining that the separate TCI state is the separate UL TCI state and/or the separate DL TCI state may be any one of the above methods. In other embodiments of the disclosure, the method for determining that the separate TCI state is the separate UL TCI state and/or the separate DL TCI state may be a combination of any two thereof, a combination of any three thereof, a combination of any four thereof, or all five methods, in the above representations.

It should be noted that, in some embodiments of the disclosure, when the methods for determining the separate UL TCI state suitable for uplink transmission and/or the separate DL TCI state suitable for downlink reception are different, the structure of the indication information will also be different. different.

In detail, in some embodiments of the disclosure, when the separate UL TCI state suitable for uplink transmission and/or the separate DL TCI state suitable for downlink reception is determined according to the ID value of the at least one TCI state ID corresponding to the codepoint, the structure of the information indication may include at least one TCI state indication field and at least one second indication field.

In some embodiments of the disclosure, the at least one TCI state indication field may have a one-to-one correspondence with the at least one second indication field, so as to indicate whether the corresponding TCI state ID indication field appears. For example, Table 1 is a structural table of the indication information according to some embodiments of the disclosure.

**Table 1**

| second indication field | TCI state ID indication field |
|---|---|
| 1 | TCI state ID#0 |
| 1 | TCI state ID#1 |

As illustrated in Table 1, the two second indication fields of the indication information are in one-to-one correspondence with the two TCI state ID indication fields corresponding to the codepoint. The second indication field corresponding to the first TCI state ID indication field is 1, indicating that TCI state ID#0 appears in the first TCI state ID indication field, and the second indication field corresponding to the second TCI state ID indication field is 1, indicating that TCI state ID#1 appears in the second TCI state ID indication field.

In other embodiments of the disclosure, the at least one second indication field is only in one-to-one correspondence with i TCI state ID indication fields corresponding to the codepoint, where i is a positive integer less than or equal to N (that is, the total number of TCI state ID indication fields corresponding to the codepoint). For example, Table 2 is a structural table of the indication information according to some embodiments of the disclosure.

**Table 2**

| second indication field | TCI state ID indication field |
|---|---|
| | TCI state ID#0 |
| 1 | TCI state ID#1 |

As illustrated in Table 2, the indication information only includes one second indication field, and the second indication field only corresponds to the second TCI state ID indication field corresponding to the codepoint, and is used to indicate whether the corresponding TCI state ID indication field appears. The second indication field corresponding to the second TCI state ID indication field is 1, indicating that TCI state ID#1 appears in the second TCI state ID indication field.

Further, in some embodiments of the disclosure, when the separate UL TCI state suitable for uplink transmission and/or the separate DL TCI state suitable for downlink reception is determined according to the TCI state pool ID to which the at least one TCI state ID corresponding to the codepoint belongs, the structure of the indication information may include at least one TCI state ID indication field, at least one second indication field, and at least one pool ID indication field.

For example, Table 3 is a structural table of the indication information according to some embodiments of the disclosure.

**Table 3**

| second indication field | pool ID indication field | TCI state ID indication field |
|---|---|---|
| | TCI state pool ID#0 | TCI state ID#0 |
| 1 | TCI state pool ID#1 | TCI state ID#1 |

As illustrated in Table 3, the indication information includes only one second indication field, and the second indication field only corresponds to the second TCI state ID indication field corresponding to the codepoint, and is used to indicate whether the corresponding TCI state ID indication field appears. The pool ID corresponding to the first TCI state ID indication field is 0, indicating that the TCI state ID #0 of the first TCI state ID indication field is used for downlink reception; the second indication field corresponding to the second TCI state ID indication field is 1, indicating that TCI state ID#1 appears in the second TCI state ID indication field; and the pool ID corresponding to the second TCI state ID indication field is 1, indicating that TCI state ID#1 of the second TCI state ID indication field is used for uplink transmission.

In conclusion, in the method and the apparatus for information indication, the UE, the base station, and the storage medium, provided in the embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

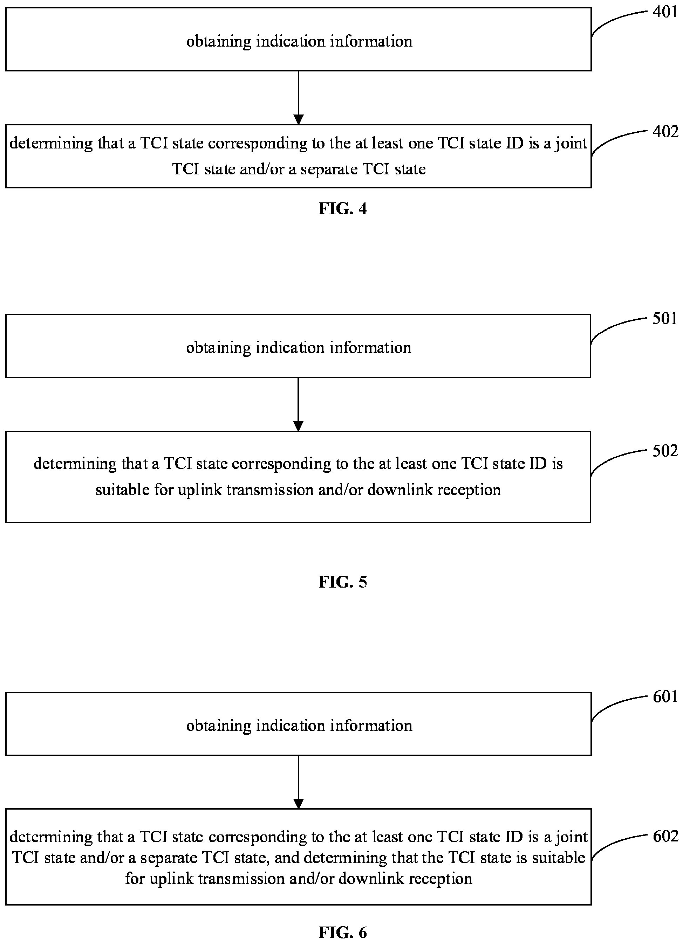

FIG. 4 is a schematic flowchart of still another method for information indication according to some embodiments of the disclosure. The method is applicable to a UE. As illustrated in FIG. 4, the method for information indication may include the following steps.

Step 401, indication information is obtained. The indication information includes at least one TCI state ID corresponding to at least one codepoint.

Step 402, it is determined that a TCI state corresponding to the at least one TCI state ID is a joint TCI state and/or a separate TCI state.

In some embodiments of the disclosure, the method for determining that the TCI state corresponding to the at least one TCI state ID is the joint TCI state and/or the separate TCI state may include: determining that the TCI state corresponding to the at least one TCI state ID is the joint TCI state and/or the separate TCI state according to a first indication field corresponding to each codepoint in the indication information.

In other embodiments of the disclosure, the method for determining that the TCI state corresponding to the at least one TCI state ID is the joint TCI state and/or the separate TCI state may include: determining that the TCI state corresponding to the at least one TCI state ID is the joint TCI state and/or the separate TCI state according to a number of TCI state ID(s) corresponding to the codepoint.

In conclusion, in the method for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

FIG. 5 is a schematic flowchart of still another method for information indication according to some embodiments of the disclosure. The method is applicable to a UE. As illustrated in FIG. 5, the method for information indication may include the following steps.

Step 501, indication information is obtained. The indication information includes at least one TCI state ID corresponding to at least one codepoint.

Step 502, it is determined that a TCI state corresponding to the at least one TCI state ID is suitable for uplink transmission and/or downlink reception.

In some embodiments of the disclosure, the method for determining that the TCI state corresponding to the at least one TCI state ID is suitable for uplink transmission and/or downlink reception may include at least one of:
determining according to an ID value of the at least one TCI state ID corresponding to the codepoint;
determining according to a TCI state pool ID to which the at least one TCI state ID corresponding to the codepoint belongs;
determining according to uplink and downlink purpose information of the at least one TCI state ID corresponding to the codepoint;
determining according to TCI state information of the at least one TCI state ID corresponding to the codepoint; or
determining according to a location of an indication field of the at least one TCI state ID corresponding to the codepoint in the indication information.

It should be noted that, in some embodiments of the disclosure, the method for determining that the TCI state corresponding to the at least one TCI state ID is suitable for uplink transmission and/or downlink reception may be any one of the above methods. In other embodiments of the disclosure, the method for determining that the separate TCI state is the separate UL TCI state and/or the separate DL TCI state may be a combination of any two thereof, a combination of any three thereof, a combination of any four thereof, or all five methods, in the above representations.

In conclusion, in the method for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

FIG. 6 is a schematic flowchart of still another method for information indication according to some embodiments of the disclosure. The method is applicable to a UE. As illustrated in FIG. 6, the method for information indication may include the following steps.

Step 601, indication information is obtained. The indication information includes at least one TCI state ID corresponding to at least one codepoint.

Step 602, it is determined that a TCI state corresponding to the at least one TCI state ID is a joint TCI state and/or a separate TCI state, and determined that the TCI state is suitable for uplink transmission and/or downlink reception.

For the detailed introduction of steps 601-602, reference may be made to the foregoing embodiments, and the embodiments of the disclosure will not repeat them herein.

In conclusion, in the method for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

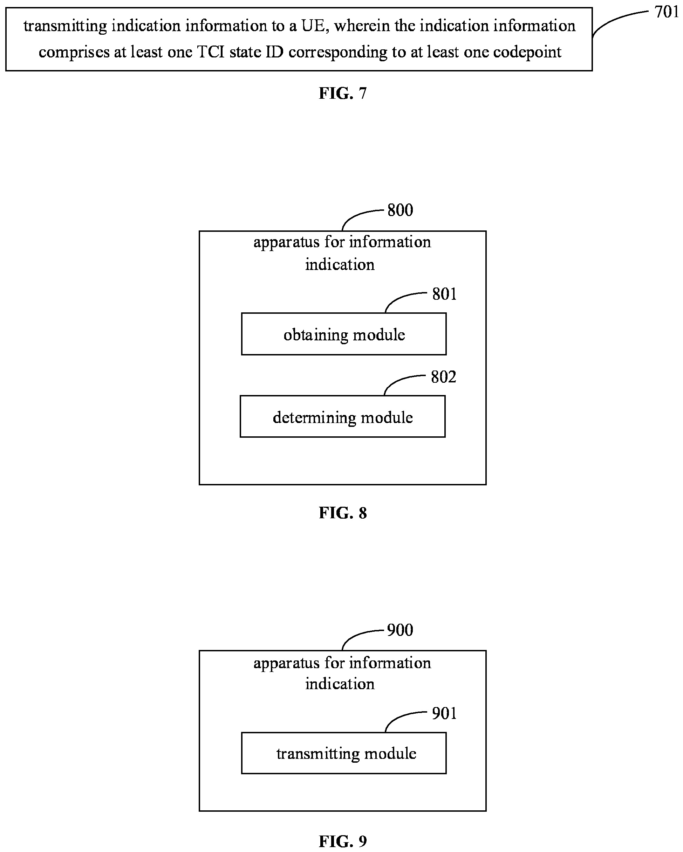

FIG. 7 is a schematic flowchart of still another method for information indication according to some embodiments of the disclosure. The method is applicable to a base station. As illustrated in FIG. 7, the method for information indication may include the following steps.

Step 701, indication information is transmitted to a UE. The indication information may include at least one TCI state ID corresponding to at least one codepoint.

In some embodiments of the disclosure, the base station may transmit the indication information to the UE through an MACCE signaling.

Further, in some embodiments of the disclosure, the indication information may further include a first indication field, and the first indication field indicates the indication information activating the joint TCI state and/or the separate TCI state. For a detailed introduction about the first indication field, reference may be made to the description of the foregoing embodiments, and details are not described in the embodiments of the disclosure.

Further, in some embodiments of the disclosure, the indication information may also include a TCI state pool ID to which the at least one TCI state ID corresponding to the codepoint belongs, and the TCI state pool ID to which the TCI state corresponding to the TCI state for uplink transmission and the TCI state pool ID to which the TCI state corresponding to the TCI state for downlink reception belongs are different. For a detailed introduction about the TCI state pool ID, reference may be made to the description of the foregoing embodiments, and the embodiments of the disclosure are not repeated herein.

Further, in some embodiments of the disclosure, the indication information may also include uplink and downlink purpose information corresponding to the at least one TCI state ID corresponding to the codepoint, and the uplink and downlink purpose information includes one of: for uplink transmission, for downlink reception, or for uplink transmission and downlink reception. For a detailed introduction of the uplink and downlink purpose information corresponding to the TCI state ID, reference may be made to the description of the above-mentioned embodiments, and the embodiments of the disclosure are not repeated herein.

Further, in some embodiments of the disclosure, the indication information may also include TCI state information of the at least one TCI state ID corresponding to the codepoint. In some embodiments of the disclosure, the TCI state information includes at least one of: a reference signal type corresponding to a QCL type D in the TCI state; or a purpose of a reference signal in the TCI state. Further, in some embodiments of the disclosure, the reference signal type included in the TCI state may include at least one of: SSB, CSI-RS, or SRS. Further, in some embodiments of the disclosure, the purpose of the reference signal may include at least one of: a QCL, a pathloss indication, or a power control parameter indication. For a detailed introduction of the TCI state information corresponding to the TCI state ID, reference may be made to the description of the above-mentioned embodiments, and the embodiments of the disclosure will not repeat them herein.

Further, in some embodiments of the disclosure, the TCI state ID indication field corresponding to the codepoint is also configured to correspondingly indicate the TCI state. In detail, in some embodiments of the disclosure, the first TCI state ID indication field corresponding to the codepoint is used to indicate the joint TCI state or the separate DL TCI state, and the second TCI state ID indication field corresponding to the codepoint is used to indicate the joint TCI state or the separate UL TCI state; or the first TCI state ID indication field corresponding to the codepoint is used to indicate the joint TCI state or the separate UL TCI state, and the second TCI state ID indication field corresponding to the codepoint is used to indicate the joint TCI state or the separate DL TCI state. For the relevant introduction about the TCI state indicated by the TCI state ID indication field, reference may be made to the above description, and the embodiments of the disclosure will not repeat it herein.

Further, in some embodiments of the disclosure, the indication information may further include at least one second indication field, the second indication field is in one-to-one correspondence with the TCI state ID indication field corresponding to the codepoint, and the second indication field is used to indicate whether the TCI state ID in one TCI state ID indication field appears. For a detailed introduction about the second indication field, reference may be made to the description of the foregoing embodiments, and details are not described in the embodiments of the disclosure herein.

In conclusion, in the method for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

FIG. 8 is a schematic block diagram of an apparatus for information indication according to some embodiments of the disclosure. As illustrated in FIG. 8, the apparatus 800 may include an obtaining module 801 and a determining module 802.

The obtaining module 801 is configured to obtain indication information including at least one TCI state ID corresponding to at least one codepoint.

The determining module 802 is configured to determine that a TCI state corresponding to the at least one TCI state ID is a joint TCI state and/or a separate TCI state, and/or determine that the TCI state is suitable for uplink transmission and/or downlink reception.

In conclusion, in the apparatus for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

In some embodiments of the disclosure, the indication information further includes a first indication field; and the first indication field indicates any of:
the indication information only activating the joint TCI state;
the indication information only activating the separate TCI state; or
the indication information activating the joint TCI state and the separate TCI state.

Further, in other embodiments of the disclosure, the first indication field indicates the indication information only activating the joint TCI state includes:
the indication information indicates at most one TCI state ID corresponding to each codepoint, a TCI state corresponding to the one TCI state ID being the j oint TCI state, and the joint TCI state being configured for uplink transmission and downlink reception.

Further, in other embodiments of the disclosure, the first indication field indicates the indication information only activating the separate TCI state includes:
the indication information indicates one TCI state ID corresponding to a first codepoint, a TCI state corresponding to the one TCI state ID being a separate DL TCI state or a separate UL TCI state, in which the separate DL TCI state is configured for downlink reception and the separate UL TCI state is configured for uplink transmission; and/or
the indication information indicates a plurality of TCI state IDs corresponding to a second codepoint, the plurality of TCI state IDs being corresponding to different TCI states, a first TCI state ID among the plurality of TCI state IDs is a separate DL TCI state, and a second TCI state ID among the plurality of TCI state IDs is a separate UL TCI state, in which the separate DL TCI state is configured for downlink reception and the separate UL TCI state is configured for uplink transmission.

Further, in other embodiments of the disclosure, the first indication field indicates the indication information activating the joint TCI state and the separate TCI state includes:
the indication information indicates one TCI state ID corresponding to a first codepoint, a TCI state corresponding to the one TCI state ID being a separate DL TCI state or a separate UL TCI state, in which the separate DL TCI state is configured for downlink reception and the separate UL TCI state is configured for uplink transmission; and/or
the indication information indicates a plurality of TCI state IDs corresponding to a second codepoint, the plurality of TCI state IDs being corresponding to a same TCI state, the same TCI state being the joint TCI state, and the joint TCI state is configured for uplink transmission and downlink reception; and/or
the indication information indicates a plurality of TCI state IDs corresponding to a third codepoint, the plurality of TCI state IDs being corresponding to different TCI states, a TCI state corresponding to a first TCI state ID among the plurality of TCI state IDs is a separate DL TCI state, and a TCI state corresponding to a second TCI state ID among the plurality of TCI state IDs is a separate UL TCI state.

Further, in other embodiments of the disclosure, the above determining module 802 is also configured to:
determine according to an ID value of the at least one TCI state ID corresponding to the codepoint;
determine according to a TCI state pool ID to which the at least one TCI state ID corresponding to the codepoint belongs;
determine according to uplink and downlink purpose information of the at least one TCI state ID corresponding to the codepoint;
determine according to TCI state information of the at least one TCI state ID corresponding to the codepoint; or
determine according to a location of an indication field of the at least one TCI state ID corresponding to the codepoint in the indication information.

Further, in other embodiments of the disclosure, the above determining module 802 is also configured to:
determine according to a number of TCI state ID(s) corresponding to the codepoint;
determine according to whether or not a plurality of TCI state IDs corresponding to the codepoint are the same;
determine according to whether or not TCI states corresponding to a plurality of TCI state IDs corresponding to the codepoint are the same;
determine according to an ID value of the at least one TCI state ID corresponding to the codepoint;
determine according to a TCI state pool ID to which the at least one TCI state ID corresponding to the codepoint belongs;
determine according to uplink and downlink purpose information of the at least one TCI state ID corresponding to the codepoint;
determine according to TCI state information of the at least one TCI state ID corresponding to the codepoint; or
determine according to a location of an indication field of the at least one TCI state ID corresponding to the codepoint in the indication information.

Further, in other embodiments of the disclosure, the above determining module 802 is also configured to:
in response to the number of TCI state ID(s) corresponding to the codepoint being one, determine that the TCI state corresponding to the one TCI state ID corresponding to the codepoint is the separate TCI state, and the separate TCI state is a separate DL TCI state or a separate UL TCI state, in which the separate DL TCI state is configured for downlink reception and the separate UL TCI state is configured for uplink transmission.

Further, in other embodiments of the disclosure, the above determining module 802 is also configured to:
in response to the number of TCI state ID(s) corresponding to the codepoint being multiple and the plurality of TCI state IDs or TCI states corresponding to the plurality of TCI state IDs are different, determine that the TCI states corresponding to the plurality of TCI state IDs corresponding to the codepoint is the separate TCI state, a TCI state corresponding to a first TCI state ID among the plurality of TCI state IDs is the separate DL TCI state, and a TCI state corresponding to a second TCI state ID among the plurality of TCI state IDs is the separate UL TCI state, in which the separate DL TCI state is configured for downlink reception and the separate UL TCI state is configured for uplink transmission.

Further, in other embodiments of the disclosure, the above determining module 802 is also configured to:
in response to the number of TCI state ID(s) corresponding to the codepoint being multiple and the plurality of TCI state IDs or TCI states corresponding to the plurality of TCI state IDs are the same, determine that TCI states corresponding to the plurality of TCI state IDs corresponding to the codepoint is the joint TCI state and the joint TCI state is configured for downlink reception and uplink transmission.

Further, in other embodiments of the disclosure, the above determining module 802 is also configured to:
determine a value range of a TCI state ID corresponding to a TCI state for uplink transmission and a value range of a TCI state ID corresponding to a TCI state for downlink reception according to default rules and/or configuration information.

Further, in other embodiments of the disclosure, the indication information also includes the TCI state pool ID to which the at least one TCI state ID corresponding to the codepoint belongs, and the TCI state pool IDs to which the TCI state IDs corresponding to the TCI states for uplink transmission and downlink reception belong are different.

Further, in other embodiments of the disclosure, the indication information also includes the uplink and downlink purpose information corresponding to the at least one TCI state ID corresponding to the codepoint, and the uplink and downlink purpose information includes any of: for uplink transmission, for downlink reception, or for uplink transmission and downlink reception.

Further, in other embodiments of the disclosure, the TCI state information includes at least one of:
a reference signal type corresponding to a QCL type D in the TCI state; or
a purpose of a reference signal in the TCI state.

Further, in other embodiments of the disclosure, the reference signal type includes at least one of: an SSB; a CSI-RS; or an SRS.

Further, in other embodiments of the disclosure, the purpose of the reference signal includes at least one of: a QCL information indication; a pathloss indication; or a power control parameter indication.

Further, in other embodiments of the disclosure, the above determining module 802 is also configured to:
an indication field of a first TCI state ID corresponding to the codepoint indicates the joint TCI state or the separate DL TCI state and an indication field of a second TCI state ID corresponding to the codepoint indicates the joint TCI state or the separate UL TCI state; or an indication field of a first TCI state ID corresponding to the codepoint indicates the joint TCI state or the separate UL TCI state and an indication field of a second TCI state ID corresponding to the codepoint indicates the joint TCI state or the separate DL TCI state.

Further, in other embodiments of the disclosure, the indication information further includes at least one second indication field, the second indication field is in one-to-one correspondence with a TCI state ID indication field corresponding to the codepoint, and the second indication field indicates whether or not a TCI state ID in one TCI state ID indication field corresponding to the codepoint appears.

Further, in other embodiments of the disclosure, obtaining the indication information transmitted by the base station includes: obtaining the indication information transmitted through an MACCE signaling.

Further, in other embodiments of the disclosure, the uplink transmission includes at least one of: PUCCH transmission, PUSCH transmission, PRACH transmission, DMRS transmission, SR transmission, or SRS transmission.

Further, in other embodiments of the disclosure, the downlink reception includes at least one of: PDCCH transmission, PDSCH transmission, PBCH transmission, SSB transmission, DMRS transmission, CSI-RS transmission, PRS transmission, or TRS transmission.

FIG. 9 is a schematic block diagram of another apparatus for information indication according to some embodiments of the disclosure. As illustrated in Fig. 9, the apparatus 900 may include a transmitting module 901.

The transmitting module 901 is configured to transmit indication information to a UE, in which the indication information includes at least one TCI state ID corresponding to at least one codepoint.

In conclusion, in the apparatus for information indication provided in embodiments of the disclosure, the UE may obtain the indication information transmitted by the base station and the indication information includes the at least one TCI state ID corresponding to the at least one codepoint. Afterwards, according to the indication information, the UE determines that the TCI state corresponding to the at least one TCI state ID is the joint TCI state and/or the separate TCI state, and/or determines that the TCI state is suitable for uplink transmission and/or downlink reception. The UE determines that the TCI state is suitable for uplink transmission and/or downlink reception according to at least one of: the first indication field in the indication information, the number of TCI state ID(s) corresponding to the codepoint, the ID value of the TCI state ID, the TCI state pool ID to which the TCI state ID belongs, the uplink and downlink purpose information of the TCI state ID, the TCI state information of the TCI state ID, and the location of the indication field of the at least one TCI state ID corresponding to the codepoint in the indication information, to determine that the TCI state is suitable for uplink transmission and/or downlink reception. It may be seen that, the embodiments of the disclosure provide a specific method for indicating the TCI state, realize the unified TCI state indication, and reduce the signaling overheads. At the same time, it also realizes the difference indication of the joint TCI state, the separate DL TCI state, the separate UL TCI state, and the separate DL&UL TCI state, thereby improving the reliability of signalings (such as a DCI signaling).

In some embodiments of the disclosure, the indication information further includes a first indication field; and the first indication field indicates any of:
the indication information only activating the joint TCI state;
the indication information only activating the separate TCI state; or
the indication information activating the joint TCI state and the separate TCI state.

Further, in other embodiments of the disclosure, the first indication field indicates the indication information only activating the joint TCI state includes:
the indication information indicates at most one TCI state ID corresponding to each codepoint, a TCI state corresponding to the one TCI state ID being the j oint TCI state, and the joint TCI state being configured for uplink transmission and downlink reception.

Further, in other embodiments of the disclosure, the first indication field indicates the indication information only activating the separate TCI state includes:
the indication information indicates one TCI state ID corresponding to a first codepoint, a TCI state corresponding to the one TCI state ID being a separate DL TCI state or a separate UL TCI state, in which the separate DL TCI state is configured for downlink reception and the separate UL TCI state is configured for uplink transmission; and/or
the indication information indicates a plurality of TCI state IDs corresponding to a second codepoint, the plurality of TCI state IDs being corresponding to different TCI states, a first TCI state ID among the plurality of TCI state IDs is a separate DL TCI state, and a second TCI state ID among the plurality of TCI state IDs is a separate UL TCI state, in which the separate DL TCI state is configured for downlink reception and the separate UL TCI state is configured for uplink transmission.

Further, in other embodiments of the disclosure, the first indication field indicates the indication information activating the joint TCI state and the separate TCI state includes:
the indication information indicates one TCI state ID corresponding to a first codepoint, a TCI state corresponding to the one TCI state ID being a separate DL TCI state or a separate UL TCI state, in which the separate DL TCI state is configured for downlink reception and the separate UL TCI state is configured for uplink transmission; and/or
the indication information indicates a plurality of TCI state IDs corresponding to a second codepoint, the plurality of TCI state IDs being corresponding to a same TCI state, the same TCI state being the joint TCI state, and the joint TCI state is configured for uplink transmission and downlink reception; and/or
the indication information indicates a plurality of TCI state IDs corresponding to a third codepoint, the plurality of TCI state IDs being corresponding to different TCI states, a TCI state corresponding to a first TCI state ID among the plurality of TCI state IDs is a separate DL TCI state, and a TCI state corresponding to a second TCI state ID among the plurality of TCI state IDs is a separate UL TCI state.

Further, in other embodiments of the disclosure, the indication information further includes a TCI state pool ID to which the at least one TCI state ID corresponding to the codepoint belongs, and a TCI state pool ID to which a TCI state ID corresponding to a TCI state for uplink transmission and a TCI state pool ID to which a TCI state ID corresponding to a TCI state for downlink reception are different.

Further, in other embodiments of the disclosure, the indication information further includes uplink and downlink purpose information corresponding to the at least one TCI state ID corresponding to the codepoint, and the uplink and downlink purpose information includes one of: for uplink transmission, for downlink reception, or for uplink transmission and downlink reception.

Further, in other embodiments of the disclosure, the indication information further includes TCI state information of the at least one TCI state ID corresponding to the codepoint.

The TCI state information includes at least one of:
a reference signal type corresponding to a QCL type D in the TCI state; or
a purpose of a reference signal in the TCI state.

Further, in other embodiments of the disclosure, the reference signal type includes at least one of: an SSB; a CSI-RS; or an SRS.

Further, in other embodiments of the disclosure, the purpose of the reference signal includes at least one of: an QCL information indication; a pathloss indication; o a power control parameter indication.

Further, in other embodiments of the disclosure, an indication field of a first TCI state ID corresponding to the codepoint indicates the joint TCI state or the separate DL TCI state and an indication field of a second TCI state ID corresponding to the codepoint indicates the joint TCI state or the separate UL TCI state; or
an indication field of a first TCI state ID corresponding to the codepoint indicates the joint TCI state or th separate UL TCI state and an indication field of a second TCI state ID corresponding to the codepoint indicates the joint TCI state or the separate DL TCI state.

Further, in other embodiments of the disclosure, the indication information further includes at least one second indication field, the second indication field is in one-to-one correspondence with a TCI state ID indication field corresponding to the codepoint, and the second indication field indicates whether or not a TCI state ID in one TCI state ID indication field corresponding to one codepoint appears.

Further, in other embodiments of the disclosure, the above-mentioned transmitting module 802 is also configured to transmit the indication information to the UE by an MACCE signaling.

Further, in other embodiments of the disclosure, the uplink transmission includes at least one of: PUCCH transmission, PUSCH transmission, PRACH transmission, DMRS transmission, uplink SR transmission, or SRS transmission.

Further, in other embodiments of the disclosure, the downlink reception includes at least one of: PDCCH transmission, PDSCH transmission, PBCH transmission, SSB transmission, DMRS transmission, CSI-RS transmission, PRS transmission, or TRS transmission.

The computer storage medium provided in the embodiments of the disclosure stores an executable program; after the executable program is executed by a processor, the method illustrated in any one of FIG. 1 to FIG. 6 or FIG. 7 may be realized.

To realize the above-mentioned embodiments, the disclosure further provides a computer program product, including a computer program, and when the computer program is executed by a processor, the method illustrated in any one of FIG. 1 to FIG. 6 or FIG. 7 may be realized.

In addition, to realize the above-mentioned embodiments, the disclosure further proposes a computer program. When the program is executed by a processor, the method as illustrated in any one of FIG. 1 to FIG. 6 or FIG. 7 may be realized.

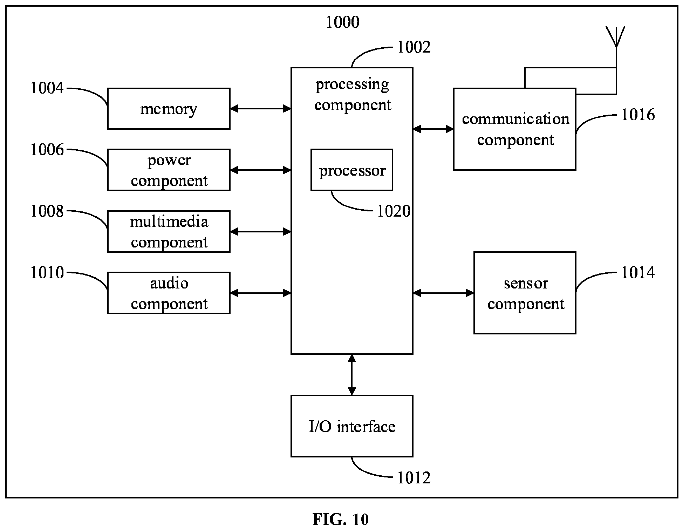

FIG. 10 is a block diagram of a UE 2500 according to some embodiments of the disclosure. For example, the UE 2500 may be a mobile phone, a computer, a digital broadcast terminal, a messaging device, a gaming console, a tablet, a medical device, exercise equipment, a personal digital assistant, and the like.

Referring to FIG. 10, the UE 1000 may include at least one of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the UE 1000, such as the operations associated with display, telephone calls, data communications, camera operations, and recording operations. The processing component 1002 may include one or more processors 1020 to execute instructions to perform all or part of the steps in the above described methods. Moreover, the processing component 1002 may include one or more modules which facilitate the interaction between the processing component 1002 and other components. For instance, the processing component 1002 may include a multimedia module to facilitate the interaction between the multimedia component 1008 and the processing component 1002.

The memory 1004 is configured to store various types of data to support the operation of the UE 1000. Examples of such data include instructions for any applications or methods operated on the UE 1000, contact data, phonebook data, messages, pictures, video, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the UE 1000. The power component 1006 may include a power management system, one or more power sources, and any other components associated with the generation, management, and distribution of power in the UE 1000.

The multimedia component 1008 includes a screen providing an output interface between the UE 1000 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1008 includes a front camera and/or a rear camera. The front camera and the rear camera may receive an external multimedia datum while the UE 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the UE 1000 is in an operation mode, such as a call mode, a recording mode, and a voice recognition mode. The received audio signal may be further stored in the memory 1004 or transmitted via the communication component 1016. In some embodiments, the audio component 810 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the UE 1000. For instance, the sensor component 1014 may detect an open/closed status of the UE 1000, relative positioning of components, e.g., the display and the keypad, of the UE 1000, a change in position of the UE 1000 or a component of the UE 1000, a presence or absence of user contact with the UE 1000, an orientation or an acceleration/deceleration of the UE 1000, and a change in temperature of the UE 1000. The sensor component 814 may include a proximity sensor configured to detect the presence of nearby objects without any physical contact. The sensor component 1014 may also include a light sensor, such as a CMOS or CCD image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the UE 1000 and other devices. The UE 1000 may access a wireless network based on a communication standard, such as WiFi, 2G, or 3G, or a combination thereof. In one exemplary embodiment, the communication component 1016 receives a broadcast signal or broadcast associated information from an external broadcast management system via a broadcast channel. In one exemplary embodiment, the communication component 1016 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the UE 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

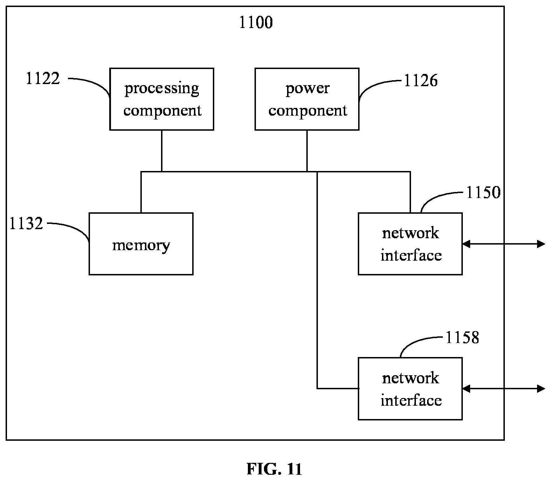

FIG. 11 is a block diagram of a base station 1100 according to some embodiments of the disclosure. For example, the base station 1100 may be provided as a base station. Referring to FIG. 11, the base station 1100 includes a processing component 1126, which further includes at least one processor, and a memory resource represented by a memory 1132 for storing instructions executable by the processing component 1122, such as application programs. The application programs stored in the memory 1132 may include one or more modules each corresponding to a set of instructions. In addition, the processing component 1126 is configured to execute instructions, so as to execute any of the aforementioned methods applied to the base station, for example, the method illustrated in FIG. 1.

The base station 1100 may also include a power component 1126 configured to perform power management of the base station 1100, a wired or wireless network interface 1150 configured to connect the base station 1100 to a network, and an I/O interface 1158. The base station 1100 may operate based on an operating system stored in the memory 1132, such as Windows Server^{™}, Mac OS X^{™}, Unix^{™}, Linux^{™}, Free BSD^{™}, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes may be made without departing from the scope thereof. It is intended that the scope of the disclosure only be limited by the appended claims.

## Claims

1. A method for information indication, applicable to a user equipment (UE), comprising:
obtaining indication information comprising at least one transmission configuration indication (TCI) state index (ID) corresponding to at least one codepoint; and
determining that a TCI state corresponding to the at least one TCI state ID is a joint TCI state and/or a separate TCI state, and/or determining that the TCI state is suitable for uplink transmission and/or downlink reception.

2. The method of claim 1, wherein the indication information further comprises a first indication field, the first indication field indicating any of:
the indication information only activating the joint TCI state;
the indication information only activating the separate TCI state; or
the indication information activating the joint TCI state and the separate TCI state.

3. The method of claim 2, wherein the first indication field indicating the indication information only activating the joint TCI state comprises:
the indication information indicating at most one TCI state ID corresponding to each codepoint, a TCI state corresponding to the one TCI state ID being the joint TCI state, and the joint TCI state being configured for uplink transmission and downlink reception.

4. The method of claim 2, wherein the first indication field indicating the indication information only activating the separate TCI state comprises:
the indication information indicating one TCI state ID corresponding to a first codepoint, a TCI state corresponding to the one TCI state ID being a separate downlink (DL) TCI state or a separate uplink (UL) TCI state, wherein the separate DL TCI state is configured for downlink reception and the separate UL TCI state is configured for uplink transmission; and/or
the indication information indicating a plurality of TCI state IDs corresponding to a second codepoint, the plurality of TCI state IDs being corresponding to different TCI states, a first TCI state ID among the plurality of TCI state IDs being a separate DL TCI state, and a second TCI state ID among the plurality of TCI state IDs being a separate UL TCI state, wherein the separate DL TCI state is configured for downlink reception and the separate UL TCI state is configured for uplink transmission.

5. The method of claim 2, wherein the first indication field indicating the indication information activating the joint TCI state and the separate TCI state comprises:
the indication information indicating one TCI state ID corresponding to a first codepoint, a TCI state corresponding to the one TCI state ID being a separate downlink (DL) TCI state or a separate uplink (UL) TCI state, wherein the separate DL TCI state is configured for downlink reception and the separate UL TCI state is configured for uplink transmission; and/or
the indication information indicating a plurality of TCI state IDs corresponding to a second codepoint, the plurality of TCI state IDs being corresponding to a same TCI state, the same TCI state being the joint TCI state, and the joint TCI state being configured for uplink transmission and downlink reception; and/or
the indication information indicating a plurality of TCI state IDs corresponding to a third codepoint, the plurality of TCI state IDs being corresponding to different TCI states, a TCI state corresponding to a first TCI state ID among the plurality of TCI state IDs being a separate DL TCI state, and a TCI state corresponding to a second TCI state ID among the plurality of TCI state IDs being a separate UL TCI state.

6. The method of claim 2, wherein the determining that the TCI state is suitable for uplink transmission and/or downlink reception comprises at least one of:
determining according to an ID value of the at least one TCI state ID corresponding to the codepoint;
determining according to a TCI state pool ID to which the at least one TCI state ID corresponding to the codepoint belongs;
determining according to uplink and downlink purpose information of the at least one TCI state ID corresponding to the codepoint;
determining according to TCI state information of the at least one TCI state ID corresponding to the codepoint; or
determining according to a location of an indication field of the at least one TCI state ID corresponding to the codepoint in the indication information.

7. The method of claim 1, wherein determining that the TCI state corresponding to the at least one TCI state ID is the joint TCI state and/or the separate TCI state, and/or determining that the TCI state is configured for uplink transmission and/or downlink reception, comprises at least one of:
determining according to a number of TCI state ID(s) corresponding to the codepoint;
determining according to whether or not a plurality of TCI state IDs corresponding to the codepoint are the same;
determining according to whether or not TCI states corresponding to a plurality of TCI state IDs corresponding to the codepoint are the same;
determining according to an ID value of the at least one TCI state ID corresponding to the codepoint;
determining according to a TCI state pool ID to which the at least one TCI state ID corresponding to the codepoint belongs;
determining according to uplink and downlink purpose information of the at least one TCI state ID corresponding to the codepoint;
determining according to TCI state information of the at least one TCI state ID corresponding to the codepoint; or
determining according to a location of an indication field of the at least one TCI state ID corresponding to the codepoint in the indication information.

8. The method of claim 7, further comprising:
determining that the TCI state corresponding to the at least one TCI state ID is the joint TCI state and/or the separate TCI state according to the number of TCI state ID(s) corresponding to the codepoint;
wherein determining that the TCI state corresponding to the at least one TCI state ID is the joint TCI state and/or the separate TCI state according to the number of TCI state ID(s) corresponding to the codepoint comprises:
in response to the number of TCI state ID(s) corresponding to the codepoint being one, determining that the TCI state corresponding to the one TCI state ID corresponding to the codepoint is the separate TCI state and the separate TCI state is a separate DL TCI state or a separate UL TCI state, wherein the separate DL TCI state is configured for downlink reception and the separate UL TCI state is configured for uplink transmission.

9. The method of claim 7, further comprising:
determining that the TCI state corresponding to the at least one TCI state ID is the joint TCI state and/or the separate TCI state according to the number of TCI state ID(s) corresponding to the codepoint;
wherein determining that the TCI state corresponding to the at least one TCI state ID is the joint TCI state and/or the separate TCI state according to the number of TCI state ID(s) corresponding to the codepoint comprises:
in response to the number of TCI state ID(s) corresponding to the codepoint being multiple, and the plurality of TCI state IDs or TCI states corresponding to the plurality of TCI state IDs being different, determining that the TCI states corresponding to the plurality of TCI state IDs corresponding to the codepoint are the separate TCI state, a TCI state corresponding to a first TCI state ID among the plurality of TCI state IDs is a separate DL TCI state, and a TCI state corresponding to a second TCI state ID among the plurality of TCI state IDs is a separate UL TCI state, wherein the separate DL TCI state is configured for downlink reception and the separate UL TCI state is configured for uplink transmission.

10. The method of claim 7, further comprising:
determining that the TCI state corresponding to the at least one TCI state ID is the joint TCI state and/or the separate TCI state according to the number of TCI state ID(s) corresponding to the codepoint;
wherein determining that the TCI state corresponding to the at least one TCI state ID is the joint TCI state and/or the separate TCI state according to the number of TCI state ID(s) corresponding to the codepoint comprises:
in response to the number of TCI state ID(s) corresponding to the codepoint being multiple, and TCI states corresponding to the plurality of TCI state IDs being the same, determining that the TCI state corresponding to the plurality of TCI state IDs corresponding to the codepoint is the joint TCI state and the joint TCI state is configured for downlink reception and uplink transmission.

11. The method of claim 6 or 7, further comprising:
determining that the separate TCI state corresponding to the TCI state ID is suitable for uplink transmission and/or downlink reception according to the ID value of the at least one TCI state ID corresponding to the codepoint;
wherein determining that the separate TCI state corresponding to the TCI state ID is suitable for uplink transmission and/or downlink reception according to the ID value of the at least one TCI state ID corresponding to the codepoint comprises:
determining a value range of a TCI state ID corresponding to a TCI state for uplink transmission and a value range of a TCI state ID corresponding to a TCI state for downlink reception according to default rules and/or configuration information.

12. The method of claim 6 or 7, further comprising:
determining that the separate TCI state corresponding to the TCI state ID is suitable for uplink transmission and/or downlink reception according to the TCI state pool ID to which the at least one TCI state ID corresponding to the codepoint belongs;
wherein the indication information further comprises the TCI state pool ID to which the at least one TCI state ID corresponding to the codepoint belongs, and a TCI state pool ID to which a TCI state ID corresponding to a TCI state for uplink transmission and a TCI state pool ID to which a TCI state ID corresponding to a TCI state for downlink reception are different.

13. The method of claim 6 or 7, further comprising:
determining that the separate TCI state corresponding to the TCI state ID is suitable for uplink transmission and/or downlink reception according to the uplink and downlink purpose information of the at least one TCI state ID corresponding to the codepoint;
wherein the indication information further comprises the uplink and downlink purpose information of the at least one TCI state ID corresponding to the codepoint, and the uplink and downlink purpose information comprises any of: for uplink transmission, for downlink reception, or for uplink transmission and downlink reception.

14. The method of claim 6 or 7, further comprising:
determining that the separate TCI state corresponding to the TCI state ID is suitable for uplink transmission and/or downlink reception according to the TCI state information of the at least one TCI state ID corresponding to the codepoint;
wherein the TCI state information comprises at least one of:
a reference signal type corresponding to a quasi-co-location (QCL) type D in the TCI state; or
a purpose of a reference signal in the TCI state.

15. The method of claim 14, wherein the reference signal type comprises at least one of:
a synchronization signal block (SSB);
a channel state information reference signal (CSI-RS); or
a sounding reference signal (SRS).

16. The method of claim 14, wherein the purpose of the reference signal comprises at least one of:
a QCL information indication;
a pathloss indication; or
a power control parameter indication.

17. The method of claim 6 or 7, further comprising:
determining that the TCI state ID is suitable for uplink transmission and/or downlink reception according to the location of the indication field of the at least one TCI state ID corresponding to the codepoint in the indication information;
wherein a first TCI state ID indication field corresponding to the codepoint indicates the joint TCI state or a separate DL TCI state and a second TCI state ID indication field corresponding to the codepoint indicates the joint TCI state or a separate UL TCI state; or
a first TCI state ID indication field corresponding to the codepoint indicates the joint TCI state or a separate UL TCI state and a second TCI state ID indication field corresponding to the codepoint indicates the joint TCI state or a separate DL TCI state.

18. The method of any one of claims 1-17, wherein the indication information further comprises at least one second indication field, the second indication field is in one-to-one correspondence with a TCI state ID indication field corresponding to the codepoint, and the second indication field indicates whether or not a TCI state ID in one TCI state ID indication field corresponding to the codepoint appears.

19. The method of claim 1, wherein obtaining the indication information transmitted by the base station comprises:
obtaining the indication information transmitted by a medium access control control element (MACCE) signaling.

20. The method of claim 1, wherein the uplink transmission comprises at least one of: physical uplink control channel (PUCCH) transmission, physical uplink shared channel (PUSCH) transmission, physical random access channel (PRACH) transmission, demodulation reference signal (DMRS) transmission, uplink scheduling requesting (SR) transmission, or sounding reference signal (SRS) transmission;
the downlink reception comprises at least one of: physical downlink control channel (PDCCH) transmission, physical downlink shared channel (PDSCH) transmission, physical broadcast channel (PBCH) transmission, synchronization signal block (SSB) transmission, DMRS transmission, channel state information reference signal (CSI-RS) transmission, positioning reference signal (PRS) transmission, or tracking reference signal (TRS) transmission.

21. A method for information indication, applicable to a base station, comprising:
transmitting indication information to a user equipment (UE), wherein the indication information comprises at least one transmission configuration indication (TCI) state index (ID) corresponding to at least one codepoint.

22. The method of claim 21, wherein the indication information further comprises a first indication field, the first indication field indicating any of:
the indication information only activating the joint TCI state;
the indication information only activating the separate TCI state; or
the indication information activating the joint TCI state and the separate TCI state.

23. The method of claim 22, wherein the first indication field indicating the indication information only activating the joint TCI state comprises:
the indication information indicating at most one TCI state ID corresponding to each codepoint, a TCI state corresponding to the one TCI state ID being the j oint TCI state, and the joint TCI state being configured for uplink transmission and downlink reception.

24. The method of claim 22, wherein the first indication field indicating the indication information only activating the separate TCI state comprises:
the indication information indicating one TCI state ID corresponding to a first codepoint, a TCI state corresponding to the one TCI state ID being a separate downlink (DL) TCI state or a separate uplink (UL) TCI state, wherein the separate DL TCI state is configured for downlink reception and the separate UL TCI state is configured for uplink transmission; and/or
the indication information indicating a plurality of TCI state IDs corresponding to a second codepoint, the plurality of TCI state IDs being corresponding to different TCI states, a first TCI state ID among the plurality of TCI state IDs being a separate DL TCI state, and a second TCI state ID among the plurality of TCI state IDs being a separate UL TCI state, wherein the separate DL TCI state is configured for downlink reception and the separate UL TCI state is configured for uplink transmission.

25. The method of claim 22, wherein the first indication field indicating the indication information activating the joint TCI state and the separate TCI state comprises:
the indication information indicating one TCI state ID corresponding to a first codepoint, a TCI state corresponding to the one TCI state ID being a separate downlink (DL) TCI state or a separate uplink (UL) TCI state, wherein the separate DL TCI state is configured for downlink reception and the separate UL TCI state is configured for uplink transmission; and/or
the indication information indicating a plurality of TCI state IDs corresponding to a second codepoint, the plurality of TCI state IDs being corresponding to a same TCI state, the same TCI state being the joint TCI state, and the joint TCI state being configured for uplink transmission and downlink reception; and/or
the indication information indicating a plurality of TCI state IDs corresponding to a third codepoint, the plurality of TCI state IDs being corresponding to different TCI states, a TCI state corresponding to a first TCI state ID among the plurality of TCI state IDs being a separate DL TCI state, and a TCI state corresponding to a second TCI state ID among the plurality of TCI state IDs being a separate UL TCI state.

26. The method of claim 21, wherein the indication information further comprises a TCI state pool ID to which the at least one TCI state ID corresponding to the codepoint belongs, and a TCI state pool ID to which a TCI state ID corresponding to a TCI state for uplink transmission and a TCI state pool ID to which a TCI state ID corresponding to a TCI state for downlink reception are different.

27. The method of claim 22, wherein the indication information further comprises uplink and downlink purpose information of the at least one TCI state ID corresponding to the codepoint, and the uplink and downlink purpose information comprises any of: for uplink transmission, for downlink reception, or for uplink transmission and downlink reception.

28. The method of any one of claim 22, wherein the indication information further comprises TCI state information of the at least one TCI state ID corresponding to the codepoint;
wherein the TCI state information comprises at least one of:
a reference signal type corresponding to a quasi-co-location (QCL) type D in the TCI state; or
a purpose of a reference signal in the TCI state.

29. The method of claim 28, wherein the reference signal type comprises at least one of:
a synchronization signal block (SSB);
a channel state information reference signal (CSI-RS); or
a sounding reference signal (SRS).

30. The method of claim 28, wherein the purpose of the reference signal comprises at least one of:
a QCL information indication;
a pathloss indication; or
a power control parameter indication.

31. The method of claim 22, wherein a first TCI state ID indication field corresponding to the codepoint indicates the joint TCI state or a separate DL TCI state and a second TCI state ID indication field corresponding to the codepoint indicates the joint TCI state or a separate UL TCI state; or
a first TCI state ID indication field corresponding to the codepoint indicates the joint TCI state or a separate UL TCI state and a second TCI state ID indication field corresponding to the codepoint indicates the joint TCI state or a separate DL TCI state.

32. The method of claim 22, wherein the indication information further comprises at least one second indication field, the second indication field is in one-to-one correspondence with a TCI state ID indication field corresponding to the codepoint, and the second indication field indicates whether or not a TCI state ID in one TCI state ID indication field corresponding to one codepoint appears.

33. The method of claim 26, wherein transmitting the indication information to the UE comprises:
transmitting the indication information to the UE by a medium access control control element (MACCE) signaling.

34. The method according to any one of claims 23-25, wherein the uplink transmission comprises at least one of: physical uplink control channel (PUCCH) transmission, physical uplink shared channel (PUSCH) transmission, physical random access channel (PRACH) transmission, demodulation reference signal (DMRS) transmission, uplink scheduling requesting (SR) transmission, or sounding reference signal (SRS) transmission;
the downlink reception comprises at least one of: physical downlink control channel (PDCCH) transmission, physical downlink shared channel (PDSCH) transmission, physical broadcast channel (PBCH) transmission, synchronization signal block (SSB) transmission, DMRS transmission, channel state information reference signal (CSI-RS) transmission, positioning reference signal (PRS) transmission, or tracking reference signal (TRS) transmission.

35. An apparatus for information indication, comprising:
an obtaining module, configured to obtain indication information comprising at least one transmission configuration indication (TCI) state index (ID) corresponding to at least one codepoint; and
a determining module, configured to determine that a TCI state corresponding to the at least one TCI state ID is a joint TCI state and/or a separate TCI state, and/or determine that the TCI state is suitable for uplink transmission and/or downlink reception.

36. An apparatus for information indication, comprising:
a transmitting module, configured to transmit indication information to a user equipment (UE), wherein the indication information comprises at least one transmission configuration indication (TCI) state index (ID) corresponding to at least one codepoint.

37. A user equipment, comprising: a transceiver; a memory; and a processor, connected to the transceiver and the memory respectively, configured to, by executing computer-executable instructions on the memory, control wireless signal transmission and reception of the transceiver and perform the method of any one of claims 1 to 20.

38. A base station, comprising: a transceiver; a memory; and a processor, connected to the transceiver and the memory respectively, configured to, by executing computer-executable instructions on the memory, control wireless signal transmission and reception of the transceiver and perform the method of any one of claims 21 to 34.

39. A computer storage medium, wherein the computer storage medium stores computer-executable instructions; when the computer-executable instructions are executed by a processor, the method of any one of claims 1 to 20 or 21 to 34 is performed.
